# EUROPÄISCHE PATENTSCHRIFT

(11) **EP 1 024 735 B1**
(45) Veröffentlichungstag und Bekanntmachung des Hinweises auf die Patenterteilung: **30.01.2002**
(21) Anmeldenummer: 98952693.4
(22) Anmeldetag: 02.10.1998
(51) Int. Cl.: A47J 27/08

(54) **KOCHGEFÄSS**
COOKING VESSEL
RECIPIENT POUR LA CUISSON

(30) Priorität: 22.10.1997 DE 19746509
(43) Veröffentlichungstag der Anmeldung: 09.08.2000
(73) Patentinhaber: AMC International Alfa Metalcraft Corporation AG, 6343 Rotkreuz (CH)
(72) Erfinder: BECK, Hans-Jürgen, CH-6014 Littau (CH); THELEN, Arnold, D-55758 Kempfeld (DE); DIETRICH, Uwe, D-55758 Niederhosenbach (DE)
(74) Vertreter: KEIL & SCHAAFHAUSEN Patentanwälte
(86) Internationale Anmeldenummer: EP9806293
(87) Internationale Veröffentlichungsnummer: WO9920164

(56) Entgegenhaltungen:
- WO-A-91/18543
- WO-A-96/35621
- US-A- 4 294 377

## Beschreibung

Die Erfindung bezieht sich auf ein Kochgefäß, mit einem für die Aufnahme von Kochgut bestimmten, einen nach außen abgewinkelten umlaufenden Behälterrand aufweisenden Behälter und mit einem auf den Behälter aufsetzbaren einen nach außen abgewinkelten umlaufenden Deckelrand aufweisenden Deckel, bei welchem der Behälter von dem aufgesetzten Deckel mit Hilfe eines auf Behälterrand und Deckelrand einwirkenden Verschlußmechanismus druckdicht verschließbar ist, wobei der Verschlußmechanismus einen sich nahezu über den gesamten Behälterumfang erstreckenden, in seiner Höhe im wesentlichen undeformierbaren, in radialer Öffnungsrichtung jedoch elastisch verformbaren, eigensteifen Verschlußring mit nach radial innen offenem C-Profil-Querschnitt aufweist, welcher mit Hilfe eines an dem Deckel angeordneten Betätigungsmechanismus aus einer Offenstellung mit größerem Durchmesser, in welchem der Behälterrand von einem unteren Schenkel des Verschlußringes freigegeben ist, so daß der Deckel von dem Behälter abnehmbar ist, in eine Verschlußstellung mit kleinerem Durchmesser überführbar ist, in welcher der Behälterrand und der Deckelrand unter Zwischenlage eines Dichtungsringes zwischen dem unteren kürzeren Schenkel und einem oberen längeren Schenkel des Verschlußringes zusammen geklemmt sind.

Ein derartiges Kochgefäß ist beispielsweise aus der WO-A-96 35621 bekannt. Dort ist ein Deckel für einen Behälter mit einem nach außen abgewinkelten umlaufenden Behälterrand vorgesehen. Der Behälter weist einen periferisch am Rand des Behälters wirkenden Verschlußmechanismus auf. Am Rand des Deckels ist zu diesem Zweck ein offener Verschlußring aus Metall mit elastischen Eigenschaften untergebracht, der eine Federkraft aufweist, die beim Erweitern des Verschlußringes im Durchmesser zunimmt. Der Verschlußring ist in seiner Ruhelage zwischen dem Endbereich einer Partie des umlaufenden Behälterrandes und dem Endbereich einer am Deckelrand ringförmig ausgebildeten abgewinkelten Partie eingeklemmt. Der Verschlußmechanismus umfaßt Mittel, um den Durchmesser des Verschlußringes gegen diese Federkraft zu erweitern. Der Verschlußring ist ein C-Profil mit zwischen seinen beiden Enden, an welchen der Verschlußmechanismus ansetzt, vollständig durchgehenden Wandungen. Nachteilig hierbei ist, daß der Verschlußring in Verschlußstellung keine vollständig runde Form einnimmt, was aber aus Gründen größtmöglicher Sicherheit anzustreben ist. Nachteilig ist ferner, daß der bekannte Verschlußring einerseits aus verhältnismäßig starkem Material bestehen muß, damit er die Druckkräfte aufnehmen kann, also unter den gegebenen Betriebsbedingungen eines Dampfdruckkochtopfes in seiner Höhe im wesentlichen undeformierbar ist, andererseits aber die erforderliche Elastizität und leichte Verstellbarkeit in radialer Richtung aufweisen soll. Diese Anforderungen sind schwer miteinander zu erfüllen.

Aufgabe der vorliegenden Erfindung ist es, insbesondere diese Nachteile des Standes der Technik zu beheben und ein Kochgefäß der eingangs genannten Art vorzuschlagen, welches ohne technischen Mehraufwand größere Sicherheit und leichtere Bedienbarkeit aufweist.

Diese Aufgabe wird nach einem Hauptgedanken der Erfindung beispielsweise dadurch gelöst, daß entweder die umlaufenden Schenkel des Verschlußringes mit radialen, zum inneren Schenkelrand hin offenen, über den Umfang verteilten Schlitzen vorgegebene Länge und Breite versehen sind oder die Schenkel von in Umfangsrichtung kurzen, an einem radial außen umlaufenden ringförmigen Verbindungselement unter Freihaltung von über den Umfang verteilten Zwischenräumen angebrachten C-Profil-Abschnitten gebildet sind.

Hierdruch werden mehrere Vorteile gleichzeitig erreicht: Durch die Auswahl der Schlitze bzw. Zwischenräume nach Länge und Breite können die Öffnungskräfte unter Berücksichtigung einer optimalen Bedienbarkeit eingestellt werden, ohne daß die Undeformierbarkeit des Verschlußringes in seiner Höhe leidet. Es kann daher für den Verschlußring bzw. die einzelnen C-Profil-Abschnitte eine verhältnismäßig große Materialstärke eingesetzt werden, um die Sicherheit des Verschlusses zu erhöhen. Die leichte Bedienbarkeit wird hierdurch nicht beeinträchtigt. Mit der Anzahl der Schlitze bzw. der Zwischenräume steigt die Annäherung des Verschlußringes an die Kreisform, was ebenfalls zu erhöhter Sicherheit beiträgt.

Sind die Schenkel des Verschlußringes unterschiedlich lang, also der untere Schenkel kürzer als der obere, so daß bei einer Überführung des Verschlußringes nach außen in Offenstellung der Behälterrand von dem unteren Schenkel bereits freigegeben wird, während der obere Schenkel noch an dem Deckelrand geführt ist, kann über die unterschiedliche Schlitzlänge ein Ausgleich der radialen Verformbarkeit im oberen und unteren Schenkelbereich geschaffen werden, indem die Schlitze in beiden Schenkeln jeweils im gleichen Abstand vor dem C-Profil-Rücken enden.

Eine weitere Verbesserung der Funktionssicherheit kann dadurch erreicht werden, daß der Verschlußring an einem, zum Beispiel mit Federelementen an dem Deckel lösbar gehaltenen und zum Beispiel aus Kunststoff bestehenden Abdeckring in Richtung senkrecht zur Deckelachse geführt ist.

Bei einer weiteren Ausgestaltung der Erfindung liegt der Verschlußring in seiner Offenstellung an einer äußeren, zum Beispiel von dem Abdeckring gebildeten, parallel zu dem Deckelumfang verlaufenden Umfangsschulter an, so daß er am Außenumfang zentriert wird. Dies hat den Vorteil, daß die innere Randkante des unteren Schenkels des Verschlußringes in Offenstellung des verschlußringes nur einen geringen Abstand von der entsprechenden Randkante des Behälterrandes zu haben braucht, um ein ungestörtes Aufsetzen und Abnehmen des Deckels zu gewährleisten.

Es ist ferner gemäß einem weiteren Erfindungsmerkmal von Vorteil, wenn die Randkanten von Behälterrand und Deckelrand einerseits und die beiden Schenkel des Verschlußringes andererseits einander zugekehrte Abwinklungen aufweisen, wodurch nicht nur eine Aussteifung der betreffenden Ränder und Schenkel, sondern auch eine zuverlässige Führung dieser Elemente einander sichergestellt wird.

Gemäß einer noch weiteren Ausgestaltung der Erfindung ist der Verschlußring derart vorgespannt, daß er in seiner Offenstellung dazu neigt, seinen Durchmesser zu verringern, also selbsttätig in Verschlußstellung überzugehen, wenn er nicht gewollt daran gehindert wird. Dies trägt zu einer weiteren Erhöhung der Sicherheit bei.

Eine einfache Bedienung des nach der Erfindung ausgebildeten Kochgefäßes erhält man insbesondere dann, wenn die beiden Enden des Verschlußringes zur Krafteinleitung mit dem Betätigungsmechanismus, vorzugsweise formschlüssig, verbunden sind.

Dabei kann in dem Betätigungsmechanismus eine Kraftübersetzung und ggf. Kraftumsetzung von einer Bewegung eines Betätigungselements in eine Bewegung der Enden des verschlußringes in Umfangsrichtung erfolgen.

Um zu verhindern, daß der Verschlußring selbsttätig aus seiner Offenstellung in die Verschlußstellung gelangt oder umgekehrt, können der Betätigungsmechanismus und damit auch die Lage der Enden des Verschlußringes und/oder der Verschlußring selbst in Offenstellung und/oder Verschlußstellung arretierbar sein.

Aus Sicherheitsgründen kann ferner der Betätigngsmechanismus mit einer Nulldrucksicherung gekoppelt sein, und zwar in der Art, daß die Betätigung zur Aufweitung des Verschlußringes aus der Verschlußstellung in Öffnungsrichtung nur eingeleitet werden kann, wenn das Behälterinnere druckentlastet ist.

Der Betätigungsmechanismus ist dabei zweckmäßigerweise so ausgestaltet, daß bei seiner Betätigung zum Öffnen zunächst abgedampft wird, bis das Gefäßinnere drucklos ist, dadurch die ggf. vorgesehene Nulldrucksicherung den weiteren Betätigungsweg freigibt, die Enden des Verschlußringes von einem Sperrglied entriegelt werden und das Betätigungselement zum Öffnen des Verschlußriegels freigegeben wird, so daß die Enden des Verschlußringes in Umfangsrichtung auseinanderbewegbar sind.

Der Betätigungsmechanismus kann einen Schieber als Betätigungselement aufweisen, mithilfe dessen die Nulldrucksicherung, ein Drehknopf zum Öffnen des Verschlußringes als weiteres Betätigungselement und damit die Enden des Verschlußringes verriegelbar sind.

Weitere Ziele, Merkmale, Vorteile und Anwendungsmöglichkeiten der Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger Kombination den Gegenstand der Erfindung, auch unabhängig von ihrer Zusammenfassung in einzelnen Ansprüchen oder deren Rückbeziehung.

Es zeigen:
- Fig. 1: einen Deckel für ein die Erfindung aufweisendes Kochgefäß, von unten gesehen,
- Fig. 2: einen Vertikalschnitt durch ein die Erfindung aufweisendes Kochgefäß entsprechend der Schnittlinie A-A von Fig. 1, gemäß einer Ausführung,
- Fig. 3a und 3b: einen Vertikalschnitt entsprechend Fig. 2 durch einen erfindungsgemäßen Deckel anderer Ausgestaltung, wobei sich in Fig. 3a der Verschlußring in offenstellung, in Fig. 3b dagegen in Verschlußstellung befindet,
- Fig. 4a und 5a: Draufsichten auf Teilabschnitte von Verschlußringen unterschiedlicher Ausführung,
- Fig. 4b und 5b: Schnitte durch die Verschlußringe von Fig. 4a und 5a entsprechend den dort eingezeichneten Schnittlinien A-A,
- Fig. 6: eine teilweise weggebrochene Ansicht von schräg unten auf einen die Erfindung aufweisenden Deckel mit dem Betätigungsmechanismus, und
- Fig. 7 und 8: zwei weitere Darstellungen eines erfindungsgemäßen Kochgefäßes im Bereich des Betätigungsmechanismus für den Verschlußring.

Das in den Figuren dargestellte Kochgefäß besteht aus einem Behälter 1 zur Aufnahme von Kochgut und einem Deckel 2, mit welchem der Behälter 1 druckdicht verschlossen werden kann. Der Behälter 1 hat einen nach außen abgewinkelten glatt umlaufenden Behälterrand 2 und der Deckel 3 einen nach außen abgewinkelten glatt umlaufenden Deckelrand 4. Behälterrand 2 und Deckelrand 4 sind jeweils an ihren außen umlaufenden Randkanten mit - wie zeichnerisch dargestellt - nach oben bzw. unten weisenden Abwinklungen 14 versehen.

Der Verschlußmechanismus für das Kochgefäß weist einen sich im wesentlichen über den gesamten Behälterumfang erstreckenden, in seiner Höhe im wesentlichen undeformierbaren, in radialer Öffnungsrichtung jedoch elastisch verformbaren, eigensteifen Verschlußring 6 mit nach radial innen offenem C-Profil-Querschnitt auf. Mit Hilfe eines an dem Deckel 3 angeordneten Betätigungsmechanismus 7 kann der Verschlußring 6 aus einer Offenstellung mit größerem Durchmesser in eine Verschlußstellung mit kleinerem Durchmesser überführt werden. In der Offenstellung des Verschlußringes 6 ist der Behälterrand 2 von einem unterem Schenkel 8 des Verschlußringes 6 freigegeben, so daß der Deckel 3 von dem Behälter 1 nach oben abgenommen werden kann. In Verschlußstellung des Verschlußringes 6, in welcher dieser einen kleineren Durchmesser einnimmt, als in Offenstellung, sind der Behälterrand 2 und der Deckelrand 3 unter Zwischenlage eines Dichtungsringes 5 zwischen dem unteren, kürzen Schenkel 8 und dem oberen, längeren Schenkel 9 des als C-Profil ausgebildeten Verschlußringes 6 zusammengeklemmt.

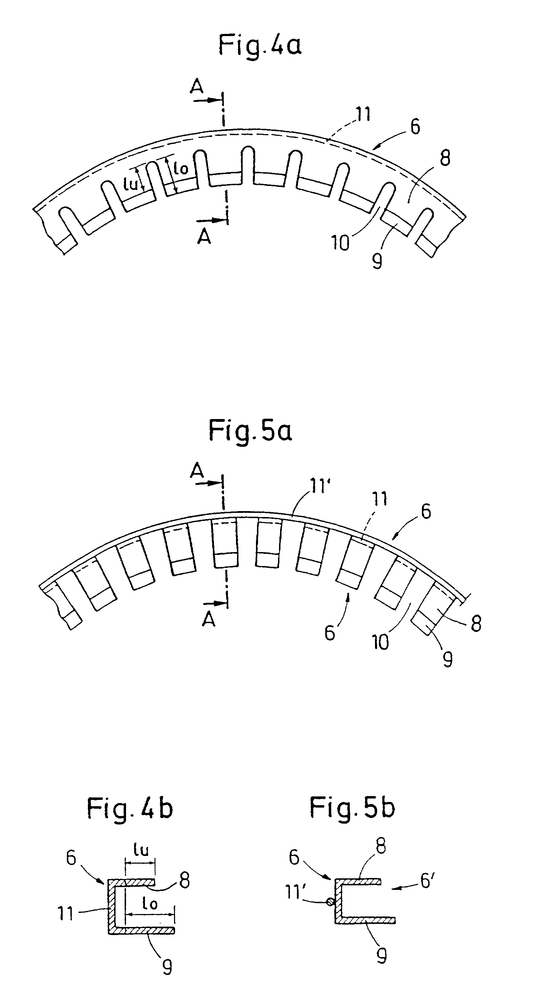

Aus den Fig. 4a bis 5b ergibt sich, daß der Verschlußring 6 entweder in seinen beiden Schenkeln 8, 9 gleichmäßig über den Umfang verteilt Schlitze 10 auswählbarer Länge und Breite aufweist oder der Verschlußring 6 von einem ringförmig umlaufenden zum Beispiel aus Draht bestehenden Verbindungselement 11' gebildet sein kann, an welchem C-Profil-Abschnitte kurzer Länge gleichmäßig über den Umfang verteilt mit Zwischenräumen 10' angebracht, zum Beispiel angepunktet sind.

Wie sich aus Fig. 4a ergibt, haben die Schlitze 10 in dem kürzeren unteren Schenkel 8 und dem längeren oberen Schenkel 9 unterschiedliche Länge, sie enden jedoch zum Ausgleich der unterschiedlichen Schenkellänge jeweils in gleichem Abstand von dem gemeinsamen C-Profil-Rücken 11.

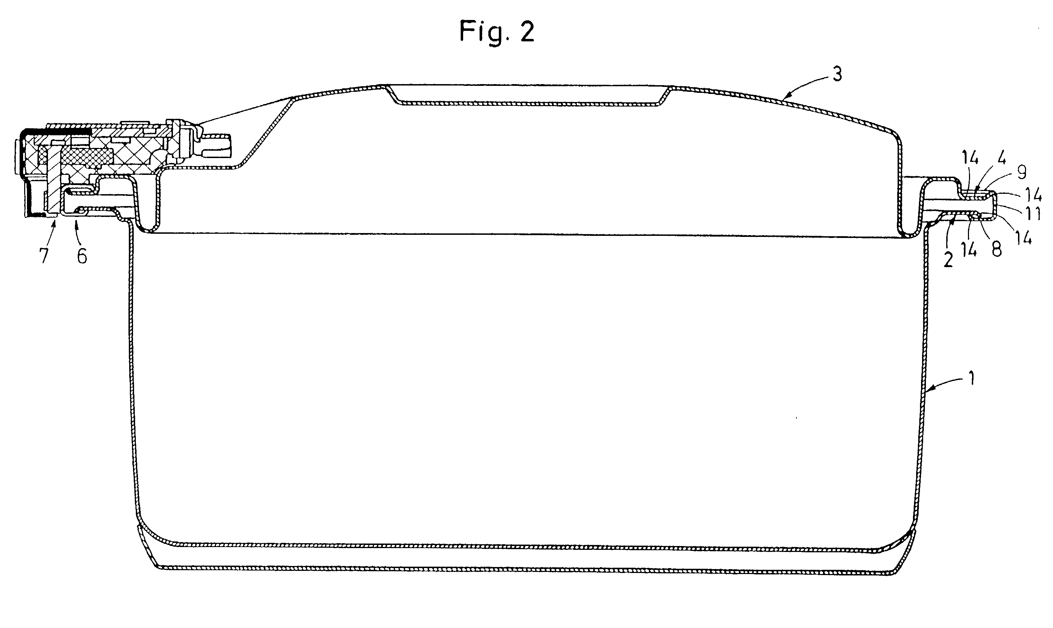

Wie aus den Fig. 2 bis 3b hervorgeht, sind auch die innen umlaufenden Randkanten der Schenkel 8, 9 des Verschlußringes 6 mit schräg nach innen weisenden Abwinklungen 14 versehen, um, wie bei Behälterrand 2 und Deckelrand 4, eine zusätzliche Versteifung und eine Führung dieser Elemente aneinander zu erreichen.

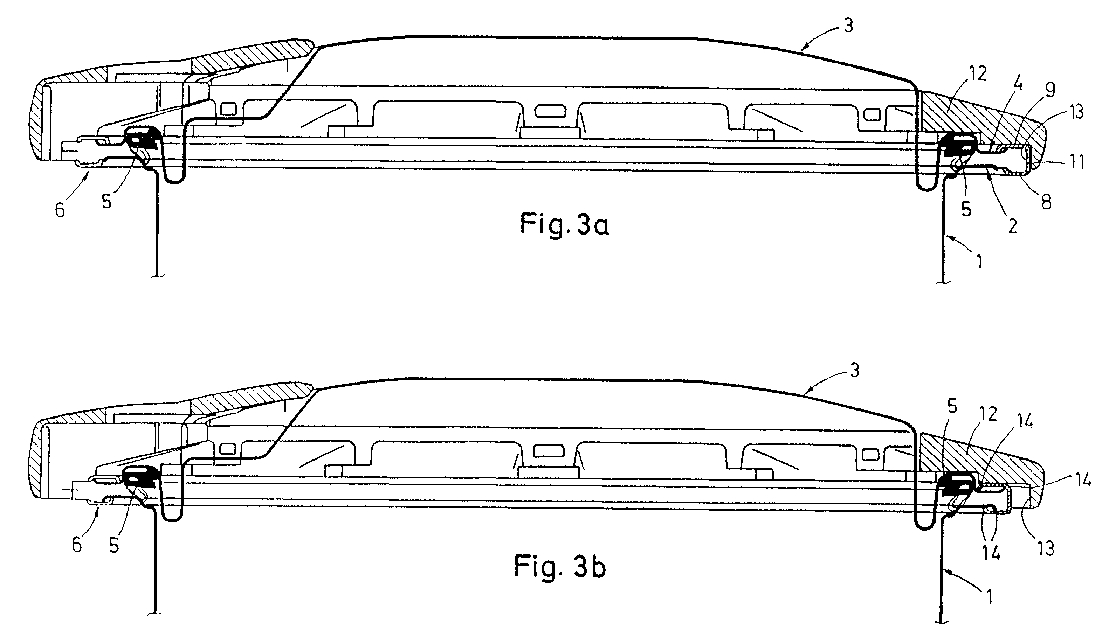

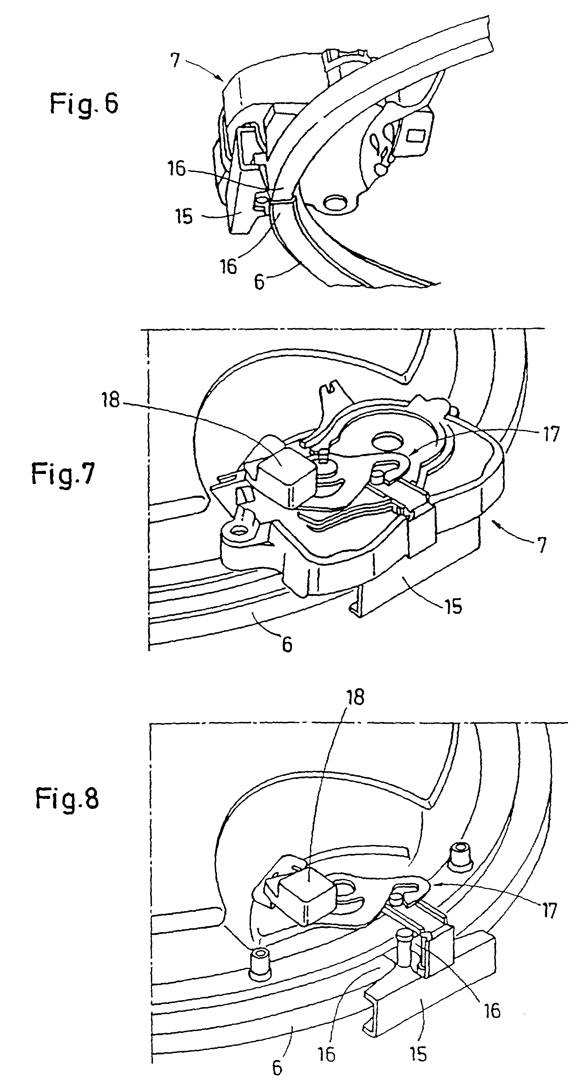

Bei der in den Fig. 3a und 3b dargestellten Ausführungsform ist ersichtlich, daß der Verschlußring 6 bei seiner Öffnungs- und Schließbewegung an einem Abdeckring 12 aus Kunststoff senkrecht zur Drehachse geführt ist, welcher mit Hilfe von (nicht dargestellten) Federelementen an dem metallenen Körper des Deckels 3 lösbar angebracht sein kann. Dieser Abdeckring 12 ist auch dazu geeignet, den Betätigungsrnechanismus 7 (vgl. die Fig. 6 bis 8) für den Verschlußring 6 aufzunehmen. Der Abdeckring 12 bildet ferner eine Umfangsschulter 13, an welcher der Verschlußring 6 in seiner in Fig. 3a dargestellten Offenstellung mit seinem C-Profil-Rücken 11 anliegt und dadurch zentriert gehalten wird.

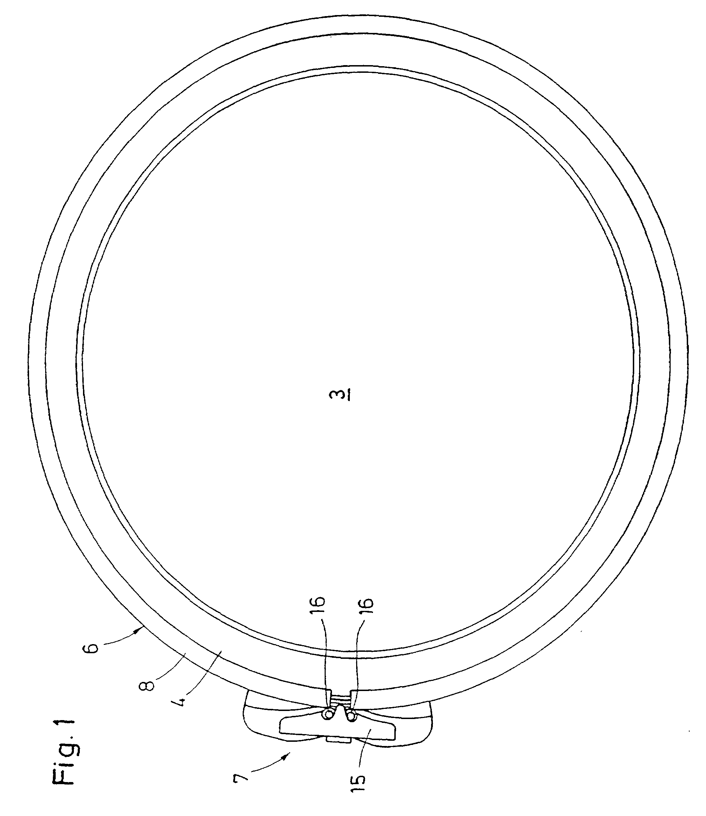

Wie aus den Fig. 1 sowie 6 bis 8 hervorgeht, hat der Betätigungsmechanismus 7 ein radial verstellbares Sperrglied 15, welches in Verschlußstellung Endabschnitte 16 des Verschlußringes 6 verriegelnd umgreift. Ferner weist der Betätigungsmechanismus 7 ein Hebel-Getriebe 17 auf, welches eine Bewegung eines z. B. als Drehknopf ausgebildeten (nicht dargestellten) weiteren Betätigungselements in eine Bewegung der Enden des Verschlußringes 6 in Umfangsrichtung umsetzt.

Der Öffnungsvorgang verläuft im wesentlichen wie folgt: Durch Betätigen eines Schiebers (18) des Betätigungsmechanismus 7 wird das Gefäßinnere zunächst durch Abdampfen drucklos gemacht. Die Nulldrucksicherung gibt dann den weiteren Betätigungsweg des Schiebers 18 frei. Dadurch kann das Sperrglied 15 in seine Offenstellung überführt werden. Gleichzeitig wird ein Drehknopf freigegeben, so daß der Verschlußring 6 geöffnet werden kann. Eine Drehung des Drehknopfes bewegt die Enden des Verschlußringes 6 in Umfangsrichtung voneinander weg, so daß sich der Verschlußring 6 in seinem Durchmesser aufweitet, bis er zentriert an der Umfangsschulter 13 des Abdeckringes 12 anliegt. In der offenen Position kann der Drehknopf einrasten, so daß der Verschlußring 6 gegen seine vorspannungsbedingte Neigung, sich zu verengen, in seiner kreisrunden zentrierten Offenstellung gehalten wird. In dieser Stellung kann der Deckel 3 einfach von dem Behälter 1 nach oben abgenommen werden, da der Behälterrand 2 von dem unteren Schenkel 8 des Verschlußringes 6 freigegeben ist.

Zum Schließen wird der Drehknopf in umgekehrter Richtung gedreht, wodurch der Verschlußring 6 durch Zusammenführen seiner Enden in die Verschlußstellung gebracht wird, bei welcher Behälterrand 2 und Deckelrand 4 unter Zwischenlage des Dichtungsringes 5 von den Schenkeln 8, 9 des Verschlußringes 6 eingeklemmt werden. Dieser Vorgang wird durch die Vorspannung des Verschlußringes 6 unterstützt, wodurch ein hoher Bedienungskomfort gewährleistet ist. Die Verriegelung erfolgt dann in der oben erwähnten Weise mittels des Schiebers 18.

### Bezugszeichenliste:

- 1: Behälter
- 2: Behälterrand
- 3: Deckel
- 4: Deckelrand
- 5: Dichtungsring
- 6: Verschlußring
- 6': C-Profil-Abschnitte
- 7: Betätigungsmechanismus
- 8: unterer Schenkel
- 9: oberer Schenkel
- 10: Schlitze
- 10': Zwischenräume
- 11: C-Profil-Rücken
- 11': Verbindungselement
- 12: Abdeckring
- 13: Umfangsschulter
- 14: Abwinkelungen
- 15: Sperrglied
- 16: Endabschnitte
- 17: Hobel-Getriebe
- 18: Schieber

## Patentansprüche

1. Kochgefäß, mit einem für die Aufnahme von Kochgut bestimmten, einen nach außen abgewinkelten, umlaufenden Behälterrand (2) aufweisenden Behälter (1) und mit einem auf den Behälter (1) aufsetzbaren einen nach außen abgewinkelten umlaufenden Deckelrand (4) aufweisenden Deckel (3), bei welchem der Behälter (1) von dem aufgesetzten Deckel (3) mit Hilfe eines auf Behälterrand (2) und Deckelrand (4) einwirkenden Verschlußmechanismus druckdicht verschließbar ist, wobei der Verschlußmechanismus einen sich nahezu über den gesamten Behälterumfang erstreckenden, in seiner Höhe im wesentlichen undeformierbaren, in radialer Öffnungsrichtung jedoch elastisch verformbaren, eigensteifen Verschlußring (6) mit nach radial innen offenem C-Profil-Querschnitt aufweist, welcher mit Hilfe eines an dem Deckel (3) angeordneten Betätigungsmechanismus (7) aus einer Offenstellung mit größerem Durchmesser, in welchem der Behälterrand (2) von einem unteren Schenkel (8) des Verschlußringes (6) freigegeben ist, so daß der Deckel (3) von dem Behälter (1) abnehmbar ist, in eine Verschlußstellung mit kleinerem Durchmesser überführbar ist, in welcher der Behälterrand (2) und der Deckelrand (4) unter Zwischenlage eines Dichtungsringes (5) zwischen dem unteren, vorzugsweise kürzeren Schenkel (8) und einem oberen, vorzugsweise längeren Schenkel (9) des Verschlußringes (6) zusammengeklemmt sind, **dadurch gekennzeichnet, daß** entweder die umlaufenden Schenkel (8, 9) des Verschlußringes (6) mit radialen, zum inneren Schenkelrand hin offenen, über den Umfang verteilten Schlitzen (10) vorgegebener Länge und Breite versehen sind oder die Schenkel (8, 9) von in Umfangsrichtung kurzen, an einem radial außen umlaufenden ringförmigen Verbindungselement (11') unter Freihaltung von über den Umfang verteilten Zwischenräumen (10') angebrachten C-Profil-Abschnitten (6') gebildet sind.

2. Kochgefäß nach Anspruch 1, **dadurch gekennzeichnet, daß** die Schlitze (10) in dem unteren Schenkel (8) und in dem oberen Schenkel (9) unterschiedlich lang sind, aber jeweils in gleichem Abstand vor dem C-Profil-Rücken (11) enden.

3. Kochgefäß nach Anspruch 1 oder 2, **dadurch gekennzeichnet, daß** der Verschlußring (6) an einem zum Beispiel mit Federelementen an dem Deckel (3) lösbar gehaltenen und zum Beispiel aus Kunststoff bestehenden Abdeckring (12) senkrecht zur Deckelachse geführt ist.

4. Kochgefäß nach einem oder mehreren der vorhergehenden Ansprüche, **dadurch gekennzeichnet, daß** der Verschlußring (6) in seiner Offenstellung an einer äußeren zum Beispiel von dem Abdeckring (12) gebildeten, parallel zu dem Deckelumfang verlaufenden Umfangsschulter (13) anliegt.

5. Kochgefäß nach einem oder mehreren der vorhergehenden Ansprüche, **dadurch gekennzeichnet, daß** die Randkanten von Behälterrand (2) und Deckelrand (4) einerseits und die beiden Schenkel (8, 9) des Verschlußringes (6) andererseits einander zugekehrte Abwinkelungen (14) aufweisen.

6. Kochgefäß nach einem der mehreren der vorhergehenden Ansprüche, **dadurch gekennzeichnet, daß** der Verschlußring (6) derart vorgespannt ist, daß er in seiner Offenstellung dazu neigt, seinen Durchmesser zu verringern.

7. Kochgefäß nach einem oder mehreren der vorhergehenden Ansprüche, **dadurch gekennzeichnet, daß** die beiden Enden des Verschlußringes (6) zur Krafteinleitung mit dem Betätigungsmechanismus (7), vorzugsweise formschlüssig, verbunden sind.

8. Kochgefäß nach einem oder mehreren der vorhergehenden Ansprüche, **dadurch gekennzeichnet, daß** in dem Betätigungsmechanismus (7) eine Kraftübersetzung und ggf. eine Kraftumlenkung von einer Bewegung eines Betätigungselements in eine Bewegung der Enden des Verschlußringes (6) in Umfangsrichtung erfolgt.

9. Kochgefäß nach einem oder mehreren der vorhergehenden Ansprüche, **dadurch gekennzeichnet, daß** der Betätigungsmechanismus (7) und/oder der Verschlußring (6) in Offenstellung und/oder in Verschlußstellung arretierbar sind/ist.

10. Kochgefäß nach einem oder mehreren der vorhergehenden Ansprüche, **dadurch gekennzeichnet, daß** mit dem Betätigungsmechanismus (7) eine Nulldrucksicherung gekoppelt ist.

11. Kochgefäß nach Anspruch 8, **dadurch gekennzeichnet, daß** bei Betätigung des Betätigungsmechanismus (7) zum Öffnen zunächst abgedampft wird, bis das Gefäßinnere drucklos ist, dadurch die ggf. vorgesehene Nulldrucksicherung den weiteren Betätigungsweg freigibt, die Enden des Verschlußringes (6) von einem Sperrglied (15) entriegelt werden und das Betätigungselement zum Öffnen des Verschlußringes (6) freigegeben wird, so daß die Enden des Verschlußringes (6) in Umfangsrichtung auseinanderbewegbar sind.

12. Kochgefäß nach einem der vorhergehenden Ansprüche, **dadurch gekennzeichnet, daß** der Betätigungsmechanismus einen Schieber (18) als Betätigungselement aufweist, mithilfe dessen die Nulldrucksicherung, ein Drehknopf zum Öffnen des Verschlußringes (6) verriegelbar sind.

## Claims

1. Cooking utensil with a container (1) intended to hold goods to be cooked, having a peripheral container rim (2) bent to the outside and with a lid (3) having a peripheral lid rim (4) bent to the outside which can be placed on the container (1) in which the container (1) can be closed pressure-tight by the applied lid (3) by means of a closing mechanism acting on the container rim (2) and the lid rim (4), where the closing mechanism is an inherently rigid closing ring (6) extending almost over the entire periphery of the container (1), essentially non-deformable in height but elastically deformable in the radial opening direction having a C-profile cross section open to the radial inside, which by means of an activation mechanism (7) arranged on the lid (3) can be brought from an open position of greater diameter in which the container rim (2) is released from a lower arm (8) of the closing ring (6) so that the lid (3) can be removed from the container (1) into a closed position of smaller diameter in which the container rim (2) and the lid rim (4) are clamped together with an intermediate sealing ring (5) between the lower preferably shorter arm (8) and an upper preferably longer arm (9) of the closing ring (6), **characterized in that** either the peripheral arms (8, 9) of the closing ring (6) are provided with radial slots (10) of given length and width and open towards the inner arm rim and evenly spread over the periphery, or the arms (8, 9) are formed by C-profile sections (6') short in the peripheral direction arranged on an outer radial annular peripheral jointing element (11') while maintaining spaces (10') spread over the periphery.

2. Cooking utensil according to claim 1, **characterized in that** the slots (10) in the lower arm (8) and the upper arm (9) are of different lengths but end at the same distance from the C-profile back (11).

3. Cooking utensil according to claim 1 or 2, **characterized in that** the closing ring (6) is guided vertical to the lid axis on a cover ring (12) and releasably held for example by spring elements on the lid (3) consisting for example of plastic.

4. Cooking utensil according to any one or more of the previous claims, **characterized in that** the closing ring (6) in its open position lies on an outer peripheral shoulder (13) running parallel to the lid periphery and formed for example by the cover ring (12).

5. Cooking utensil according to any one or more of the previous claims, **characterized in that** the edges of the container rim (2) and the lid rim (4) on one side and the two arms (8, 9) of the closing ring (6) on the other side have bendings (14) facing each other.

6. Cooking utensil according to any one or more of the previous claims, **characterized in that** the closing ring (6) is pretensioned such that in its open position it has a tendency to reduce its diameter.

7. Cooking utensil according to any one or more of the previous claims, **characterized in that** the two ends of the closing ring (6) are connected, preferably by interlocking, to the activation mechanism (7) in order to introduce force.

8. Cooking utensil according to any one or more of the previous claims, **characterized in that** in the activation mechanism (7) a force is transformed or deflected from a movement of an activation element into a movement of the ends of the closing ring (6) in the peripheral direction.

9. Cooking utensil according to any one or more of the previous claims, **characterized in that** the activation mechanism (7) and/or the closing ring (6) can be locked in the open position and/or in the closed position.

10. Cooking utensil according to any one or more of the previous claims, **characterized in that** a zero pressure security device is coupled to the activation mechanism (7).

11. Cooking utensil according to claim 8, **characterized in that** on operation of the activation mechanism (7) for opening, steam is first released until the inside of the vessel is no longer under pressure, as a result the zero pressure security device provided releases the further activation path, the ends of the closing ring (6) are unlocked from a blocking element (15) and the activation element is released to open the closing ring (6) so that the ends of the closing ring (6) can be moved apart in the peripheral direction.

12. Cooking utensil according to any one of the previous claims, **characterized in that** the activation mechanism has a slider (18) as an activation element, by means of which the zero pressure security device, a rotary knob to open the closing ring (6), can be locked.

## Revendications

1. Récipient pour la cuisson, avec un récipient (1) destiné à recevoir les éléments à faire cuire et muni d'un bord de récipient (2) périphérique coudé vers l'extérieur, et avec un couvercle (3) destiné à être posé sur le récipient (1) et muni d'un bord de couvercle (4) périphérique coudé vers l'extérieur, dans lequel le récipient (1) peut être fermé de façon étanche sous pression par le couvercle (3) posé à l'aide d'un mécanisme de fermeture agissant sur le bord du récipient (2) et le bord du couvercle (4), le mécanisme de fermeture étant muni d'une bague de fermeture (6) rigide s'étendant pratiquement sur toute la périphérie du récipient, pratiquement indéformable en hauteur tout en étant déformable de façon élastique en direction de l'ouverture radiale et dont la section a un profil en C ouvert en direction radiale vers l'intérieur, la bague de fermeture pouvant passer, au moyen d'un mécanisme d'actionnement (7) placé sur le couvercle (3), d'une position ouverte à grand diamètre dans laquelle le bord du récipient (2) est libéré d'une arrête inférieure (8) de la bague de fermeture (6) de sorte que le couvercle (3) peut être soulevé du récipient (1), à une position fermée de diamètre plus petit dans laquelle le bord du récipient (2) et le bord du couvercle (4) sont bloqués ensemble, en interposant une bague d'étanchéité (5), entre l'arrête inférieure (8) de préférence plus courte et l'arrête supérieure (9) de préférence plus longue de la bague de fermeture (6), **caractérisé en ce que** soit les arrêtes périphériques (8, 9) de la bague de fermeture (6) sont munies de fentes (10) radiales ouvertes en direction du bord intérieur des arrêtes, réparties sur la périphérie et de longueur et de largeur spécifiées, soit les arrêtes (8, 9) sont formées de sections (6') courtes tangentiellement, profilées en C, disposées sur un élément d'assemblage (11') annulaire périphérique extérieur par rapport à la direction radiale en maintenant des espaces intermédiaires (10') répartis sur la circonférence.

2. Récipient pour la cuisson selon la revendication 1, **caractérisé en ce que** les fentes (10) dans l'arrête inférieure (8) et dans l'arrête supérieure (9) n'ont pas la même longueur tout en se terminant à la même distance du dos du profilé en C (11).

3. Récipient pour la cuisson selon la revendication 1 ou 2, **caractérisé en ce que** la bague de fermeture (6) est guidée perpendiculairement à l'axe du couvercle sur une bague de couverture (12) maintenue de façon amovible sur le couvercle (3) par exemple par un élément élastique et réalisée par exemple en matière plastique.

4. Récipient de cuisson selon l'une ou plusieurs des revendications précédentes, **caractérisé en ce que** la bague de fermeture (6) en position ouverte est adjacente à un épaulement périphérique (13) extérieur s'étendant parallèlement à la circonférence du couvercle et formé par exemple par bague de couverture (12).

5. Récipient de cuisson selon l'une ou plusieurs des revendications précédentes, **caractérisé en ce que** d'une part les arrêtes des bords du récipient (2) et du couvercle (4) et d'autre part les deux arrêtes (8, 9) de la bague de fermeture (6) sont munies de replis orientés les uns vers les autres.

6. Récipient de cuisson selon l'une ou plusieurs des revendications précédentes, **caractérisé en ce que** la bague de fermeture (6) est précontrainte de sorte qu'elle tende en position ouverte à réduire son diamètre.

7. Récipient de cuisson selon l'une ou plusieurs des revendications précédentes, **caractérisé en ce que** les deux extrémités de la bague de fermeture (6) sont reliées au mécanisme d'actionnement (7), de préférence par emboîtement, pour transmettre la force.

8. Récipient de cuisson selon l'une ou plusieurs des revendications précédentes, **caractérisé en ce que** dans le mécanisme d'actionnement (7) une multiplication de force et le cas échéant une déflexion de force ont lieu d'un mouvement tangentiel de l'élément d'actionnement en un mouvement des extrémités de la bague de fermeture (6).

9. Récipient de cuisson selon l'une ou plusieurs des revendications précédentes, **caractérisé en ce que** le mécanisme d'actionnement (7) et / ou la bague de fermeture (6) peut / peuvent être bloqué(s) en position ouverte et / ou en position fermée.

10. Récipient de cuisson selon l'une ou plusieurs des revendications précédentes, **caractérisé en ce que** le mécanisme d'actionnement (7) est couplé à un organe de sécurité à pression zéro.

11. Récipient de cuisson selon la revendication 8, **caractérisé en ce que** lors de l'actionnement du mécanisme d'actionnement (7) pour l'ouverture on laisse échapper la vapeur jusqu'à ce que l'intérieur du récipient soit sans pression, l'éventuel organe de sécurité à pression zéro libérant de cette manière la suite du chemin d'actionnement, les extrémités de la bague de fermeture (6) sont débloquées par un élément de verrouillage (15) et l'élément d'actionnement est libéré pour ouvrir la bague de fermeture (6) de sorte que les extrémités de la bague de fermeture (6) peuvent être écartées l'une de l'autre tangentiellement.

12. Récipient de cuisson selon l'une ou plusieurs des revendications précédentes, **caractérisé en ce que** le mécanisme d'actionnement est muni d'un bouton poussoir (18) comme élément d'actionnement à l'aide duquel l'organe de sécurité à pression zéro, un bouton toumant pour l'ouverture de la bague de fermeture (6) peuvent être verrouillés.
